(19) Europäisches Patentamt
European Patent Office
Office européen des brevets

(11) **EP 4 066 596 B1**

(12) **EUROPEAN PATENT SPECIFICATION**

(45) Date of publication and mention
of the grant of the patent:
**28.08.2024  Bulletin 2024/35**

(21) Application number: **22723536.3**

(22) Date of filing: **28.01.2022**

(51) International Patent Classification (IPC):
**H05B 6/04** *(2006.01)*

(52) Cooperative Patent Classification (CPC):
**H05B 6/06; H05B 6/04; H05B 6/067;** Y02B 70/10

(86) International application number:
**PCT/US2022/014310**

(87) International publication number:
**WO 2022/169689 (11.08.2022 Gazette 2022/32)**

(54) **ACTIVE RECTIFIER WITH CURRENT SOURCE INVERTER AND VOLTAGE SOURCE INVERTER POWER SYSTEMS FOR INDUCTION HEATING AND MELTING APPLICATIONS**

AKTIVER GLEICHRICHTER MIT STROMQUELLENUMRICHTER- UND SPANNUNGSQUELLENUMRICHTER-LEISTUNGSSYSTEMEN FÜR INDUKTIONSHEIZUNG UND SCHMELZANWENDUNGEN

REDRESSEUR ACTIF AVEC ONDULEUR DE SOURCE DE COURANT ET SYSTÈMES D'ALIMENTATION D'ONDULEUR DE SOURCE DE TENSION POUR DES APPLICATIONS DE CHAUFFAGE ET DE FUSION PAR INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2021  US 202163146412 P**
**25.10.2021  US 202163271543 P**

(43) Date of publication of application:
**05.10.2022  Bulletin 2022/40**

(73) Proprietor: **Ajax Tocco Magnethermic Corporation**
**Warren, OH 44482 (US)**

(72) Inventors:
• **DELLAPENNA, Anthony**
**Canfield**
**OH 44406 (US)**

• **PTICHKIN, Andriy**
**Girard**
**OH 44420 (US)**

(74) Representative: **Finch, Steven Caffall**
**Novagraaf UK**
**3rd Floor**
**77 Gracechurch Street**
**London EC3V 0AS (GB)**

(56) References cited:
| | |
|---|---|
| WO-A1-02/071807 | WO-A1-2019/147323 |
| CN-Y- 201 238 406 | DE-A1- 3 220 142 |
| US-A1- 2006 289 494 | US-A1- 2010 230 401 |
| US-A1- 2011 242 864 | US-A1- 2013 033 907 |
| US-A1- 2016 308 460 | US-B1- 6 366 483 |

## Description

### BACKGROUND

Induction heating and melting systems use rectifiers and inverters to convert line frequency power to controllable high frequency power to drive induction heating coils. The induction heating coil turns are often installed in harsh electrical and mechanical surroundings and are prone to intermittent short circuits to other turns, the load or to ground causing rapid impedance changes reflected to the inverter. In some systems, a current source inverter (CSI) output is fed into a parallel resonant tank circuit that includes the induction heating coil to accommodate the impedance changes due to the current limiting effect of a DC reactor (e.g., DC link choke) in the CSI system.

Silicon controlled rectifiers (SCRs) can be used in CSI converters but require a forward current and a positive gate voltage to turn on, and the parallel resonant tank circuit requires oscillating current to start an SCR-based inverter. A "pony circuit" with a second set of SCRs and a capacitor in series with the induction heating coil can be included and activated for a small amount of time to initiate oscillation in the parallel resonant circuit before starting the inverter SCRs. However, the load impedance can change drastically in induction heating and melting applications, making it difficult to generate enough current for the inverter to latch on and leading to starting problems that require the circuit to be retuned to allow higher current draw. Such retuning and pony circuit components add complexity and cost to the overall power system.

Induction heating and melting systems often use phase control of the SCR-based rectifier to control the DC output voltage from the SCR-based rectifier, in which the rectifier SCRs are triggered or turned on at an angle α relative to the AC input phase voltage and the angle α is varied to control the DC output voltage amplitude. However, operating the rectifier at an angle α greater than zero causes displacement between the phase voltage and the phase current which leads to a poor displaced power factor. In addition, three phase rectification causes phase voltage distortion when commutation occurs from one phase to the next, leading to voltage notching. The depth, area and position of the notch moves as the angle α is changed, and the voltage notching can affect other equipment that shares the same feed. In addition, the current drawn by the rectifier from the source is non-sinusoidal, leading to poor total harmonic distortion (THD) performance, and the THD of both the current and voltage increase with increasing angle α. Varying the angle of the inverter voltage and inverter current can be used to control power, such as by frequency modulation of the inverter. However, the switching loss of the inverter SCRs increases as the angle between the inverter voltage and current increases and requires the device to be de-rated from the current draw that it could potentially provide when switching at a lower angle to handle a lower amount of current at a higher switching angle.

A voltage source inverter (VSI) can be used to power a series resonant tank for induction heating and melting systems. A VSI system can provide ease of control, ease of impedance matching and reduced complexity without needing starting circuits. Some voltage source power systems use a passive multi-phase diode rectifier for converting the incoming AC to DC, which can provide a constant line power factor of .93 or better. The diodes, however, cannot be turned on or off, and the DC bus voltage is constant and cannot be used to control inverter output power. Instead, many VSI systems use inverter frequency modulation to control power. The inverter controller turns the inverter switches on and off away from the resonant frequency of the series resonant tank circuit. As a user increases a desired power setpoint, the inverter controller changes the frequency of the pulses to move toward the resonant frequency of the series resonant tank circuit. As the frequency of the controlled pulses gets closer to the natural resonant frequency of the series resonant tank circuit, the output power of the inverter is increased. However, inverter frequency modulation control suffers from increased switching losses of the inverter switches because of the off-resonant switching of the inverter. In addition, for the same amount of current, as the phase angle increases, the module loss also increases.

US 6366483 B1 discloses a current source inverter fed from a pulse width modulated rectifier with independent control loops regulating power factor and DC link current.

CN 201 238 406 Y discloses a cooker having an induction heating coil powered by an inverter fed with DC power from a rectifier, wherein the firing angle of a rectifier bridge thyristor is adjusted to regulate the rectifier output voltage.

### SUMMARY

In accordance with the present invention there is provided a power conversion system as defined in claim 1. The dependent claims define optional features.

In one embodiment, a power conversion system includes an active rectifier having rectifier transistors, a DC link circuit having a DC link reactor coupled to an output of the active rectifier, an inverter having inverter transistors and an input coupled to the DC link circuit, a resonant tank circuit coupled to an output of the inverter and having an induction heating coil, a rectifier controller configured to control the rectifier transistors at a generally constant angle between triggering of the rectifier transistors relative to an AC input phase voltage using sinusoidal pulse width modulation (SPWM) with modulation index (MI) control to control a system output power, an inverter controller, and an input filter coupled to an input of the active rectifier.

In another embodiment, a power conversion system includes an active rectifier having rectifier transistors, a DC link circuit having a DC capacitor coupled to an output of the active rectifier, an inverter having inverter transistors and an input coupled to the DC link circuit, a resonant tank circuit coupled to an output of the inverter and having an induction heating coil, a rectifier controller configured to control the rectifier transistors at a generally constant angle between triggering of the rectifier transistors relative to an AC input phase voltage using sinusoidal pulse width modulation (SPWM) with modulation index (MI) control to control a system output power, an inverter controller, and an input filter coupled to an input of the active rectifier.

In a further embodiment, an induction heating or melting system includes an induction heating coil, an active rectifier having rectifier transistors, a DC link circuit coupled to an output of the active rectifier, an inverter having inverter transistors and an input coupled to the DC link circuit, a resonant tank circuit coupled to an output of the inverter and having the induction heating coil, a rectifier controller configured to control the rectifier transistors at a generally constant angle between triggering of the rectifier transistors relative to an AC input phase voltage using sinusoidal pulse width modulation (SPWM) with modulation index (MI) control to control a system output power, an inverter controller, and an input filter coupled to an input of the active rectifier.

BRIEF DESCRIPTION OF THE DRAWINGS

FIG. 1 is a schematic diagram of an induction heating and melting CSI power system.
FIG. 2 is a schematic diagram of a CSI power system with a multiphase SCR-based rectifier, a DC link circuit with a DC link reactor, an SCR-based output inverter, a resonant tank circuit including an induction heating coil, a pony circuit, a rectifier controller, an inverter controller.
FIG. 3 is a graph of AC input phase voltages supplied to the rectifier of FIG. 2, as well as a DC waveform of the rectifier, and the DC output voltage of the rectifier.
FIG. 4 is a graph of one of the AC input phase voltages with voltage notching.
FIG. 5 shows graphs of one of the AC input phase voltages and a corresponding AC input phase current.
FIG. 6 is a schematic diagram of an induction heating and melting CSI power system with an IGBT active rectifier and an IGBT inverter.
FIG. 7 is a signal diagram of active rectifier sinusoidal pulse width modulation switching control signals in the system of FIG. 6.
FIG. 8 is a graph of AC input current and AC phase voltage for one phase in the system of FIG. 6.
FIG. 9 is a graph of inverter power and temperature as a function of output current (amps RMS) in the system of FIG. 6.
FIG. 10 is a graph of inverter power and temperature for a constant inverter phase angle in the system of FIG. 6.
FIG. 11 is a schematic diagram of an induction heating and melting VSI power system with a diode rectifier and an IGBT inverter.
FIG. 12 is a graph of inverter power and temperature in the system of FIG. 11.
FIG. 13 is a schematic diagram of an induction heating and melting VSI power system with an IGBT active rectifier and an IGBT inverter.

DETAILED DESCRIPTION

In the drawings, like reference numerals refer to like elements throughout, and the various features are not necessarily drawn to scale. One or more operational characteristics of various circuits, systems and/or components are hereinafter described in the context of functions which in some cases result from configuration and/or interconnection of various structures when circuitry is powered and operating.

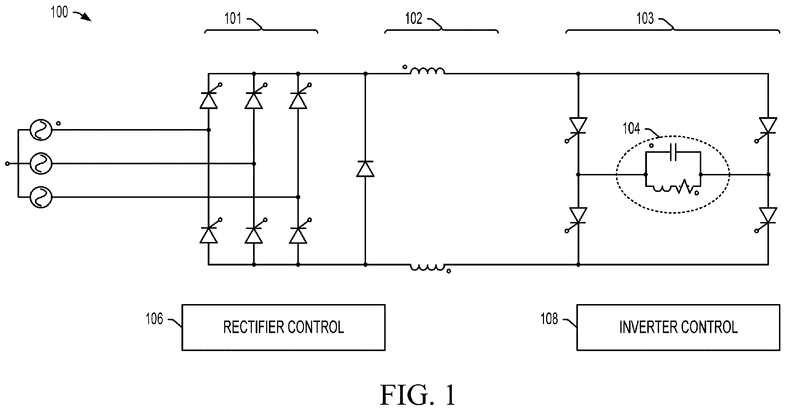

FIG. 1 shows a CSI power system 100 with a multiphase SCR-based rectifier 101, a DC link circuit 102 with a DC link reactor (e.g., choke), an SCR-based output inverter 103, a resonant tank circuit 104 including an induction heating coil, a rectifier controller 106, and an inverter controller 108. The rectifier 101 and the inverter 103 convert line frequency power to controllable hi-frequency power to drive the induction heating coil for heating and/or melting applications. The use of the CSI-inverter 103 fed into the parallel resonant tank circuit 104 is advantageous due to the harsh electrical and mechanical surroundings of the induction heating coil, in which induction heating coil turns are prone to intermittent short circuits to other turns, the load or to ground causing rapid impedance changes reflected to the inverter. The current source inverter 103 easily handles these changes due to the current limiting effect of the DC reactor of the DC link circuit 102.

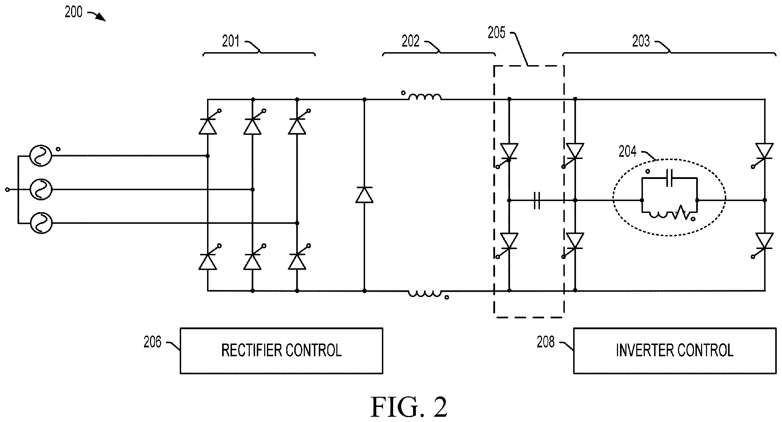

FIG. 2 shows a CSI power system 200 with a multiphase SCR-based rectifier 201, a DC link circuit 202 with a DC link reactor (e.g., choke), an SCR-based output inverter 203, a resonant tank circuit 204 including an induction heating coil, a pony circuit 205, a rectifier controller 206, and an inverter controller 208. The system 200 includes SCRs in both the rectifier 201 and the inverter 203. For the SCR to conduct current, the SCR must have a forward current to conduct and a positive pulse at the gate from the respective controller 206 or 208. The pony circuit 205 in this example includes a second set of SCRs' and a capacitor in series with the induction heating coil to provide the parallel resonant tank circuit 204 with current oscillating in it for the inverter SCRs to conduct. The added SCRs of the pony circuit 205 are operated by the inverter controller 208 for a small amount of time to start the oscillation in the parallel resonant tank circuit 204. The inverter controller 208 then starts the inverter 203 when the current is high enough to maintain the SCR in the ON state. Since the load impedance changes drastically in induction heating and melting applications, getting enough current for the inverter 203 to latch on can be challenging. This can lead to starting problems with the power converter system 200, which can only be resolved by re-tuning the circuit to allow higher current draw. These components add complexity and cost to the overall power system 200.

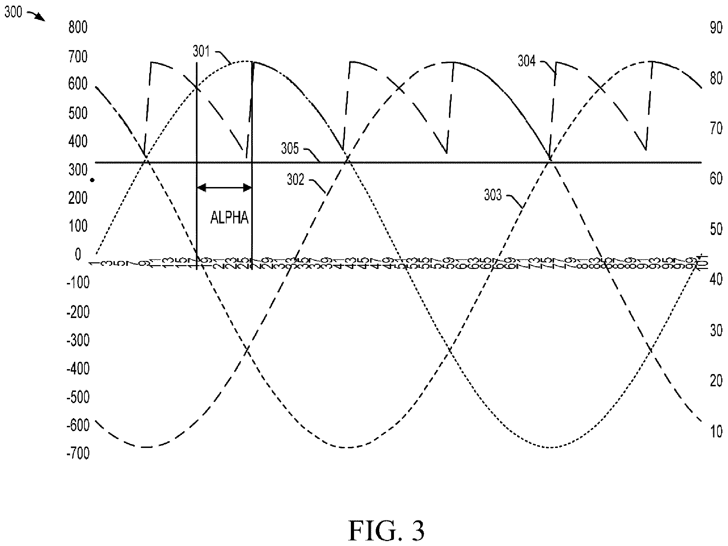

FIG. 3 shows a graph 300 with curves 301, 302, and 303 representing AC input voltages of respective phases A, B, and C that are supplied to the rectifier 201 as a function of time, as well as a curve 304 that shows a DC waveform of the rectifier 201, and a curve 305 showing the DC output voltage of the rectifier 201. In one example, the power delivered by the CSI-based system 200 for heating and/or melting is controlled by phase controlling the SCR-based rectifier 201 to vary the output DC voltage. The rectifier controller 206 delays the triggering of the rectifier SCRs in reference to the phase voltage of the AC input power by a phase angle α (e.g., labeled "alpha" in FIG. 3) in order to vary the resultant DC voltage from the rectifier 201. The output voltage of the rectifier 201 can be calculated as:

$$VDC = \frac{3\sqrt{2}}{\pi} \, x \, Vline_{rms} \, x \, Cos(\alpha)$$

This phase-controlled rectifier operating at an angle α greater than zero causes displacement between the phase voltage and the phase current which leads to a poor displaced power factor. Due to the displacement, users may be charged a demand charge for requiring more apparent power than the real power used.

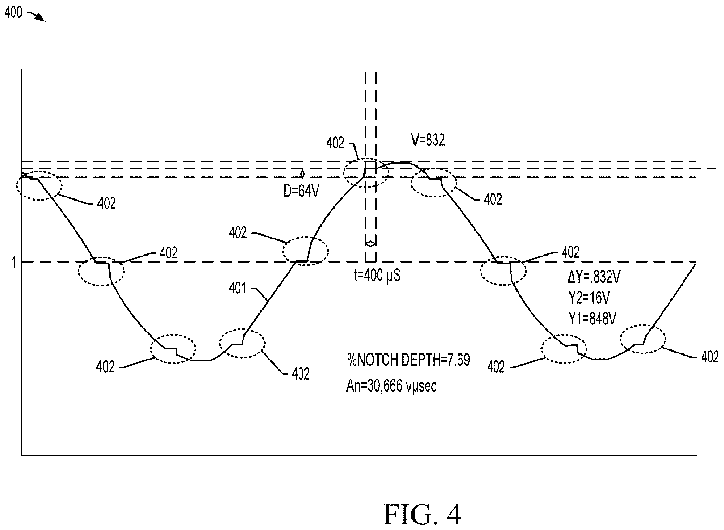

FIG. 4 shows a graph 400 with a curve 401 showing one of the AC input phase voltages. Three phase rectification in this example causes distortion on the phase voltage when commutation occurs from one phase to the next, which results in voltage notching at indicated portions 402 of the phase voltage waveform. A phase-controlled rectifier amplifies this problem because the depth, area and position of the notches moves as the phase angle α is changed. This problem can affect other equipment that shares the same feed. The phase-controlled rectifier 201 can cause the voltage to cross zero multiple times; if other equipment uses the voltage zero crossing for a timing reference, it could cause other equipment to malfunction.

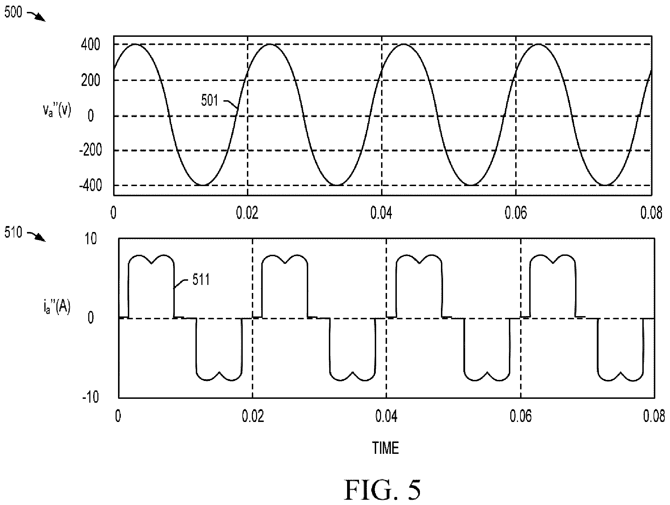

FIG. 5 shows a graph 500 with a voltage curve 501 of one of the AC input phase voltages and a graph 510 with a corresponding AC input phase current curve 511. A three phase, 6 pulse rectifier causes distortion in the current 511 that is drawn from the source. Due to the nature in which the current conducts through the rectifier 201, the current drawn is non-sinusoidal as shown in the graph 510. This causes the total harmonic distortion of the line current 511 to be very high. As the angle α is increased, the THD of both the current and voltage increases. This causes problems for reactive components such as capacitors shared on the incoming line. This can cause unwanted resonance and overheating of components.

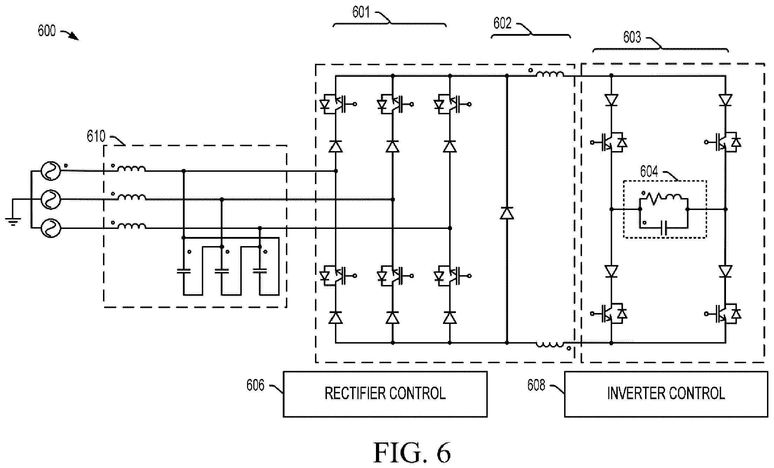

FIG. 6 shows a CSI power system 600 with a multiphase IGBT active rectifier 601, a DC link circuit 602 with a DC link reactor (e.g., choke), an IGBT output inverter 603, a resonant tank circuit 604 including an induction heating coil, a rectifier controller 606, an inverter controller 608, and an input filter 610. The rectifier controller 606 controls the IGBTs of the active rectifier 601 at a generally constant angle α between triggering of the active rectifier IGBTs of a given phase relative to the corresponding AC input phase voltage. The operation at a constant rectifier phase angle α stabilizes line distortion, voltage notching, etc. to a manageable level that is addressed by the filter 610. The rectifier controller 606 operates the active rectifier IGBTs using sinusoidal pulse width modulation (SPWM) with modulation index (MI) control to control the system output power, while maintaining a constant rectifier phase angle α.

Varying the inverter phase angle between the inverter output voltage and output current could instead be used for output power control, for example, by modulating the frequency of the inverter 603. However, as the angle between the inverter voltage and current increases, the switching loss of the inverter IGBTs increases for the same amount of current. This would lead to de-rating the inverter IGBTs from the current draw that they could potentially be used at when switching at a low phase angle to handle a lower amount of current at a higher switching angle. To mitigate or avoid inverter IGBT switching loss and derating, the system 600 instead implements rectifier modulation index control to control the output power while controlling the rectifier phase angle α to a substantially constant value (e.g., +/- 1 degree). The power conversion system 600 mitigates all the above problems of CSI converters collectively.

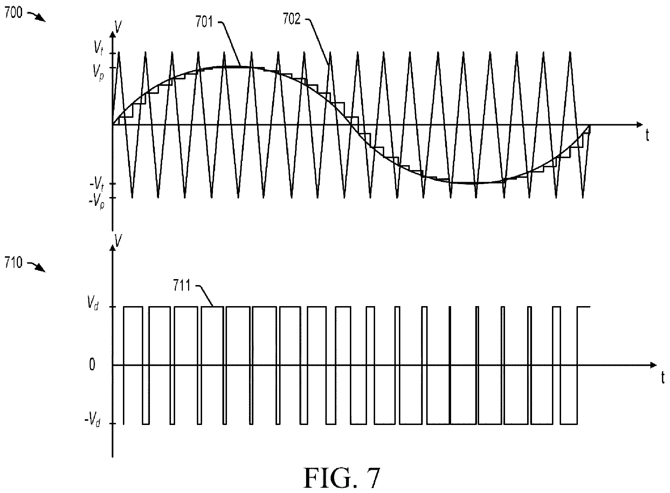

FIG. 7 shows a graph 700 with a curve 701 showing a sinusoidal waveform of one of the AC input phases at the fundamental frequency of the AC power input feed (e.g., 60 Hz or 50 Hz), and a curve 702 showing a triangular modulating signal. FIG. 7 also shows a graph 710 with a curve 711 showing a pulse width modulated switching control signal generated by the rectifier controller 606 to control the active rectifier transistors of the corresponding phase. The IGBT-based active rectifier 601 in FIG. 6 is a three phase six pulse rectifier that uses transistors (e.g., IGBTs, field effect transistors (FETs), etc.) instead of SCRs. The active rectifier transistors are driven using SPWM as shown in FIG. 7. The rectifier controller 606 in one example compares a sinusoidal waveform (e.g., curve 701) for each corresponding AC input phase (e.g., A, B, C) at the fundamental frequency to a respective triangle carrier waveform (e.g., curve 702) of a higher frequency, where the sinusoidal modulated signals 701 for the respective phases are shifted 120 degrees from one another. The pulse width modulation can be implemented using electrical circuitry of the rectifier controller 606 (e.g., sine wave generators and comparators) or the sinusoidal PWM can be implemented digitally using a programmed processor of the rectifier controller 606.

The comparison by the rectifier controller 606 generates a series of pulses (e.g., curve 711) for each respective phase that encode the fundamental frequency within the pulse train. The ratio of the sinusoidal waveform amplitude (e.g., the amplitude of the curve 701) to the triangular carrier waveform amplitude (e.g., the amplitude of the curve 702) is the modulation index (MI). The rectifier controller 606 in one example varies the modulation index to change the duty cycle of each active rectifier transistor to adjust the rectified DC output of the IGBT rectifier 601 in order to control the system power. The high frequency current pulses of the active rectifier 601 are integrated through the low pass filter 610 coupled between the active rectifier input and the AC power feed.

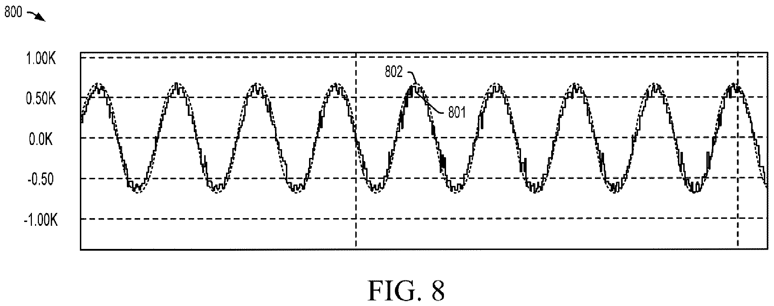

A graph 800 in FIG. 8 includes a curve 801 showing AC input or line current for one example phase in the system 600, and a curve 802 showing the AC phase voltage of the corresponding AC input phase. The low pass filter 610 filters out the high switching frequency current of the active rectifier transistors and lets only the current of the fundamental frequency be reflected to the line. Since the current commutation is at a high frequency relative to the fundamental line frequency, the low pass filter 610 removes or significantly reduces the notches normally seen in the six-pulse rectification process, thereby reducing the THD in both the line voltage and line current. This resolves potential problems with equipment sharing the feed since the voltage distortion is very low eliminating multiple zero crossings. Moreover, the rectifier controller 606 controls the relative phasing of the voltage and current waveforms to improve power factor as shown by the phase-aligned waveforms in the curves 801 and 802. As previously discussed, six pulse diode rectifiers create displacement between the voltage and current which decreases the line power factor. Since the SPWM method does not need to displace voltage and current to regulate the output voltage, the current (e.g., curve 801) can be held in phase with the voltage (curve 802) creating a displaced power factor equal to 1 (e.g., unity power factor). The rectifier controller 606 can vary the output voltage of the active rectifier 601 without affecting the displaced power factor as seen on the line.

In addition, the CSI-based system 600 of FIG. 6 does not require a pony circuit or other starting circuitry since the inverter transistors (e.g., IGBTs) can be started without waiting for current to build in the parallel resonant tank to meet the minimum latching current of an SCR. Instead, the switches used in the inverter 603 are transistors which do not require a minimum latching current. The inverter 603 can simply be switched continuously.

In the illustrated example, the inverter 603 is an H-bridge configuration with four IGBT transistors coupled between respective terminals of the DC link reactor and the parallel resonant tank circuit. In one example, when the bridge is turned on, current is then fed through the inverter 603 into the parallel tank circuit at an inverter output frequency higher than the resonant frequency of the parallel tank. This increases the voltage across the tank which increases current flow through the inverter and DC reactor. This removes the requirement of the secondary circuit to get the inverter enough current to latch on. This also resolves the "starting issues" sometimes seen in conventional current source power supplies.

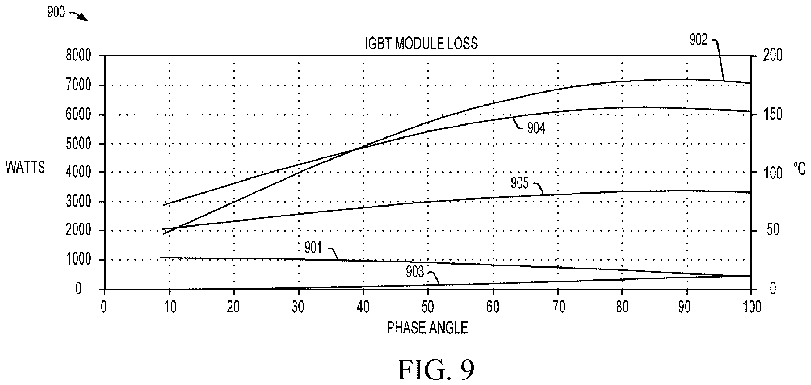

FIG. 9 shows a graph 900 as a function of output current (amps RMS). The graph 900 has a curve 901 showing IGBT power (with respect to the Watts scale on the left of the figure), a curve 902 showing module watts, a curve 903 showing power of the diode of the inverter IGBT, as well as a curve 904 showing inverter IGBT junction temperature (with respect to the degrees C scale on the right of the figure), and a curve 905 showing the IGBT case temperature. To hold constant line power factor and reduce voltage notching, the rectifier controller 606 holds the firing angle of the active rectifier 601 constant. This increases the loss in the inverter due to handling the required current at a high phase angle. As shown in FIG. 9, the inverter IGBT module watt loss and junction temperature increase as phase angle is increased for the same amount of current.

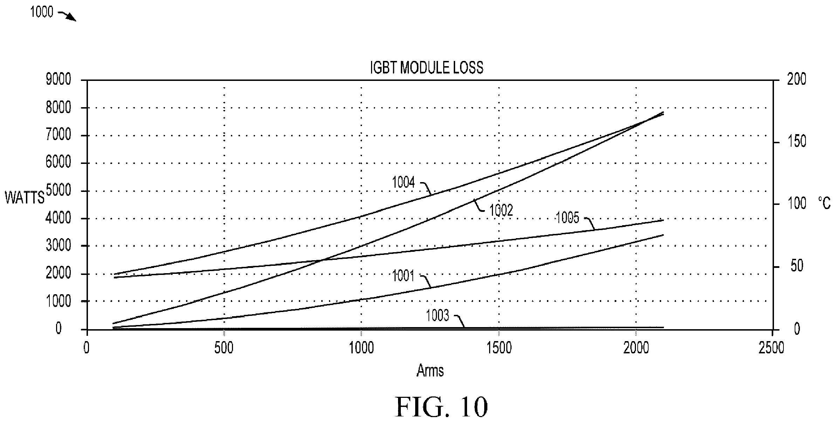

FIG. 10 shows a graph 1000 as a function of output current (amps RMS) for an inverter phase angle held constant at 20 degrees. The graph 1000 has a curve 1001 showing IGBT power (with respect to the Watts scale on the left of the figure), a curve 1002 showing module watts, a curve 1003 showing power of the diode of the inverter IGBT, as well as a curve 1004 showing inverter IGBT junction temperature (with respect to the degrees C scale on the right of the figure), and a curve 1005 showing the IGBT case temperature. To hold constant line power factor and reduce voltage notching, the rectifier controller 606 holds the firing angle of the active rectifier 601 constant. This increases the loss in the inverter 603 due to handling the required current at a high inverter phase angle. As shown in FIG. 10, the current in the same module can be increased almost two times, which solves the de-rating problem.

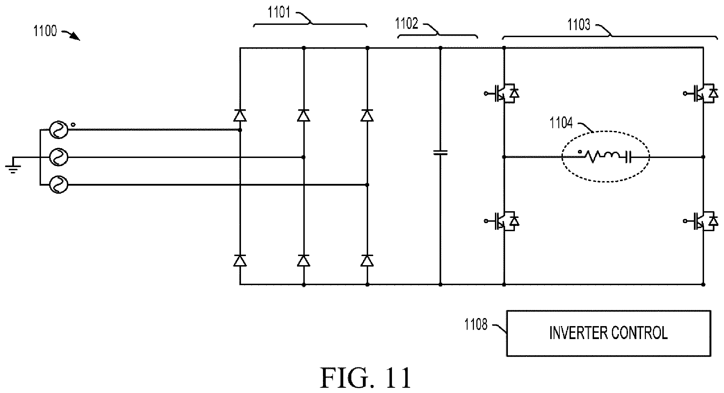

Referring now to FIGS. 11-13, another aspect provides VSI-based induction heating and melting power converters. FIG. 11 shows an induction heating and melting VSI power system 1100 with a multiphase diode rectifier 1101, a DC link circuit 1102 with a DC link capacitor, an IGBT output inverter 1103, a series resonant tank circuit 1104 with an induction heating coil, and an inverter controller 1108. The voltage source inverter 1103 fed into the series resonant tank circuit 1104 provides advantages due to the ease of control, ease of impedance matching and reduced complexity, for example, without requiring any starting circuits. The rectifier 1101 is a multi-phase diode rectifier that converts the incoming AC to DC to provide a DC bus voltage across the DC link capacitor. The passive rectifier provides a generally constant line power factor, for example, .93 or better, but since the diodes cannot be turned on or off, the DC bus voltage output by the rectifier 1101 is constant for a constant AC input supply voltage, and the rectifier 1101 cannot be used to control the inverter output power. The output power can be controlled by frequency modulation of the inverter, for example, with the inverter controller 1108 generating signals to the inverter switches to turn on and off away from the resonant frequency of the series resonant tank circuit 1104. As the desired output power setpoint is increased, the inverter controller 1108 changes the frequency of the pulses to move toward the resonant frequency of the series resonant tank circuit 1104. As the frequency of the inverter switching control pulses gets closer to the natural resonant frequency of the series resonant tank circuit 1104, the output power of the inverter 1103 is increased.

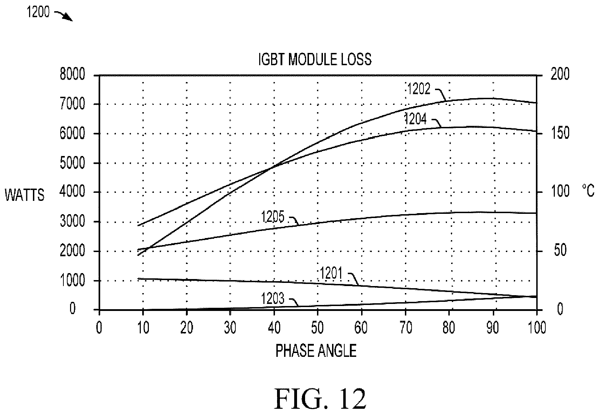

As shown in FIG. 12, however, this method suffers from inverter IGBT switching losses, which are increased because of the off-resonant switching of the inverter 1103. FIG. 12 includes a graph 1200 of inverter power and temperature in the system 1100 of FIG. 11 as a function of inverter phase angle. The graph 1200 has a curve 1201 showing IGBT power (with respect to the Watts scale on the left of the figure), a curve 1202 showing module watts, a curve 1203 showing power of the diode of the inverter IGBT, as well as a curve 1204 showing inverter IGBT junction temperature (with respect to the degrees C scale on the right of the figure), and a curve 1205 showing the IGBT case temperature. As shown in FIG. 12, for the same amount of current, as the inverter phase angle increases along the horizontal axis, the module power loss (curve 1202) also increases.

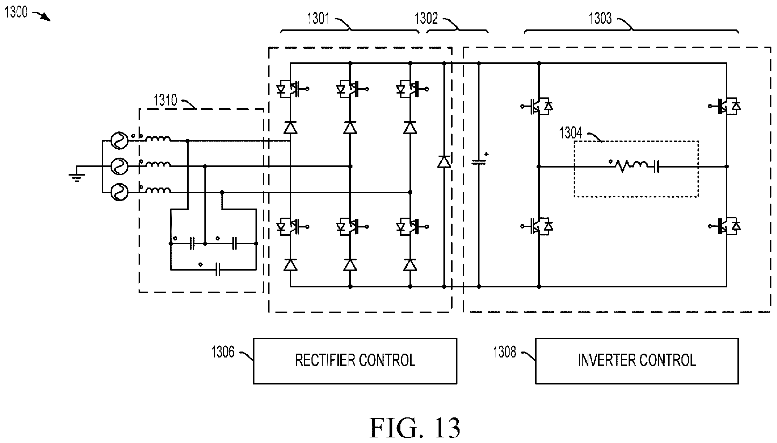

FIG. 13 shows an induction heating and melting VSI power system 1300 according to another aspect. The system 1300 has an IGBT active rectifier and an IGBT inverter. The system 1300 includes a multiphase IGBT active rectifier 1301, a DC link circuit 1302 with a DC link reactor (e.g., choke), an IGBT output inverter 1303, a series resonant tank circuit 1304 including an induction heating coil, a rectifier controller 1306, an inverter controller 1308, and an input filter 1310. In this example, the inverter controller 1308 keeps the inverter phase angle fixed at a low value to reduce switching loss in the inverter switches. This allows the inverter current to be increased to trade switching loss for conduction loss and increase the output kw capability of the same inverter 1303.

The active rectifier 1301 is a three phase six pulse active rectifier that uses transistors (e.g., IGBTs, FETs, etc.) instead of SCRs, and the rectifier controller 1306 drives the active rectifier transistors using SPWM (e.g., circuit-based or digital comparison of a sinusoidal waveform at the fundamental frequency of the AC input power to a triangle carrier waveform of a higher frequency as described above in connection with FIG. 7). The rectifier controller 1306 in one example provides active rectifier switching control signals to the active rectifier 1301 having pulses that encode the fundamental frequency within the pulse train. The ratio of the sinusoidal waveform amplitude to the triangular carrier waveform amplitude is the modulation index, and the rectifier controller 1306 varies the modulation index to change the duty cycle of the active rectifier transistors to control the rectified DC output of the IGBT active rectifier 1301. The high frequency current pulses are integrated through the low pass filter 1310. The low pass filter 1310 filters out the high switching frequency current of the active rectifier transistors and lets only the current of the fundamental frequency to be reflected to the line.

Since the DC output of the IGBT active rectifier 1301 can be varied, it can be used along with the voltage source inverter 1303 to control inverter output power. The inverter controller 1308 in one example holds (e.g., regulates) the inverter phase angle between the inverter output voltage and inverter output current at a fixed value, such as 15 degrees inductive, and the rectifier controller 1306 implements modulation index control to control the DC voltage feeding the inverter 1303 in order to control the output power of the inverter 1303. This reduces the inverter switching losses compared to the system 1100 of FIG. 11 and allows the inverter current to be increased without significantly increasing total inverter module losses.

The exemplary embodiments have been described with reference to the preferred embodiments. Obviously, modifications and alterations will occur to others upon reading and understanding the preceding detailed description. It is intended that the exemplary embodiment be construed as including all such modifications and alterations insofar as they come within the scope of the appended claims.

**Claims**

1.    A power conversion system (600; 1300), comprising:

an active rectifier (601; 1301) having rectifier transistors;
a DC link circuit (602; 1302) coupled to an output of the active rectifier (601; 1301);
an inverter (603; 1303) having inverter transistors and an input coupled to the DC link circuit (602; 1302);
a rectifier controller (606; 1306) configured to control the rectifier transistors using sinusoidal pulse width modulation (SPWM) with modulation index (MI) control;
an inverter controller (608; 1308); and
an input filter (610; 1310) coupled to an input of the active rectifier (601; 1301); **characterised in that**
a resonant tank circuit (604; 1304) is coupled to an output of the inverter (603; 1303), the resonant tank circuit (604; 1304) having an induction heating coil, and

the rectifier controller (606; 1306) is configured to control the rectifier transistors at a constant angle ($\alpha$) between triggering of the rectifier transistors relative to an AC input phase voltage to control a system output power.

2. The power conversion system (600) of claim 1, wherein the DC link circuit (602) has a DC link reactor coupled to the output of the active rectifier (601).

3. The power conversion system (600) of claim 2, wherein the inverter controller (608) is configured to control the inverter transistors to provide an inverter output voltage to the resonant tank circuit (604) at an inverter output frequency higher than a resonant frequency of the resonant tank circuit (604).

4. The power conversion system (600) of claim 2, wherein the inverter controller (608) is configured to control the inverter transistors to provide an inverter output voltage to the resonant tank circuit (604) and the inverter controller (608) is configured to hold an inverter phase angle between the inverter output voltage and an inverter output current at a fixed value.

5. The power conversion system (600) of claim 2, wherein the resonant tank circuit (604) is a parallel resonant circuit.

6. The power conversion system (1300) of claim 1, wherein the DC link circuit (1302) has a DC capacitor coupled to the output of the active rectifier (1301).

7. The power conversion system (1300) of claim 6, wherein the inverter controller (1308) is configured to control the inverter transistors to provide an inverter output voltage to the resonant tank circuit (1304) at an inverter output frequency higher than a resonant frequency of the resonant tank circuit (1304).

8. The power conversion system (1300) of claim 6, wherein the inverter controller (1308) is configured to control the inverter transistors to provide an inverter output voltage to the resonant tank circuit (1304) and the inverter controller (1308) is configured to hold an inverter phase angle between the inverter output voltage and an inverter output current at a fixed value.

9. The power conversion system (1300) of claim 8, wherein the inverter controller (1308) is configured to control the inverter phase angle at approximately 15 degrees.

10. The power conversion system (1300) of claim 6, wherein the resonant tank circuit (1304) is a series resonant circuit.

11. The power conversion system of claim 1, wherein the system is a current source inverter system, the DC link circuit (602) includes a DC link reactor coupled to the output of the active rectifier (601), and the resonant tank circuit (604) is a parallel resonant circuit.

12. The power conversion system of claim 1, wherein the system is a voltage source inverter system, the DC link circuit (602) includes a DC link capacitor coupled to the output of the active rectifier (601), and the resonant tank circuit (604) is a series resonant circuit.

13. The power conversion system of claim 1, wherein the inverter controller (1308) is configured to control the inverter transistors to provide an inverter output voltage to the resonant tank circuit (1304) at an inverter output frequency higher than a resonant frequency of the resonant tank circuit (1304).

14. The power conversion system of claim 1, wherein the inverter controller (1308) is configured to control the inverter transistors to provide an inverter output voltage to the resonant tank circuit (1304) and the inverter controller (1308) is configured to hold an inverter phase angle between the inverter output voltage and an inverter output current at a fixed value.

15. The power conversion system of claim 14, wherein the inverter controller (1308) is configured to control the inverter phase angle at approximately 15 degrees.

**Patentansprüche**

1. Leistungsumwandlungssystem (600; 1300), umfassend:

   einen aktiven Gleichrichter (601; 1301), der Gleichrichtertransistoren aufweist;
   einen Gleichstromzwischenkreis (602; 1302), der an einen Ausgang des aktiven Gleichrichters (601; 1301) gekoppelt ist;
   einen Umrichter (603; 1303), der Umrichtertransistoren und einen Eingang aufweist, der an den Gleichstromzwischenkreis (602; 1302) gekoppelt ist;
   eine Gleichrichter-Steuereinrichtung (606; 1306), die dazu ausgestaltet ist, die Gleichrichtertransistoren unter Verwendung von sinusförmiger Pulsbreitenmodulation (SPWM) mit Modulationsindex(MI)-Steuerung zu steuern;

eine Umrichtersteuereinrichtung (608; 1308); und

ein Eingangsfilter (610; 1310), das an einen Eingang des aktiven Gleichrichters (601; 1301) gekoppelt ist; **dadurch gekennzeichnet, dass** ein Resonanzschwingkreis (604; 1304) an einen Ausgang des Umrichters (603; 1303) gekoppelt ist, wobei der Resonanzschwingkreis (604; 1304) eine Induktionsheizspirale aufweist, und die Gleichrichter-Steuereinrichtung (606; 1306) dazu ausgestaltet ist, die Gleichrichtertransistoren bei einem konstanten Winkel ($\alpha$) zwischen dem Auslösen der Gleichrichtertransistoren in Bezug auf eine Wechselstrom-Eingangsphasenspannung zu steuern, um eine Systemausgangsleistung zu steuern.

2. Leistungsumwandlungssystem (600) nach Anspruch 1, wobei der Gleichstromzwischenkreis (602) eine Gleichstromzwischenkreisdrossel aufweist, die an den Ausgang des aktiven Gleichrichters (601) gekoppelt ist.

3. Leistungsumwandlungssystem (600) nach Anspruch 2, wobei die Umrichtersteuereinrichtung (608) dazu ausgestaltet ist, die Umrichtertransistoren zu steuern, um dem Resonanzschwingkreis (604) eine Umrichterausgangsspannung bei einer Umrichterausgangsfrequenz bereitzustellen, die höher ist als eine Resonanzfrequenz des Resonanzschwingkreises (604).

4. Leistungsumwandlungssystem (600) nach Anspruch 2, wobei die Umrichtersteuereinrichtung (608) dazu ausgestaltet ist, die Umrichtertransistoren zu steuern, um dem Resonanzschwingkreis (604) eine Umrichterausgangsspannung bereitzustellen, und die Umrichtersteuereinrichtung (608) dazu ausgestaltet ist, einen Umrichterphasenwinkel zwischen der Umrichterausgangsspannung und einem Umrichterausgangsstrom auf einem festen Wert zu halten.

5. Leistungsumwandlungssystem (600) nach Anspruch 2, wobei der Resonanzschwingkreis (604) ein Parallelschwingkreis ist.

6. Leistungsumwandlungssystem (1300) nach Anspruch 1, wobei der Gleichstromzwischenkreis (1302) einen Gleichstromkondensator aufweist, der an den Ausgang des aktiven Gleichrichters (1301) gekoppelt ist.

7. Leistungsumwandlungssystem (1300) nach Anspruch 6, wobei die Umrichtersteuereinrichtung (1308) dazu ausgestaltet ist, die Umrichtertransistoren zu steuern, um dem Resonanzschwingkreis (1304) eine Umrichterausgangsspannung mit einer Umrichterausgangsfrequenz bereitzustellen, die höher als eine Resonanzfrequenz des Resonanzschwingkreises (1304) ist.

8. Leistungsumwandlungssystem (1300) nach Anspruch 6, wobei die Umrichtersteuereinrichtung (1308) dazu ausgestaltet ist, die Umrichtertransistoren zu steuern, um dem Resonanzschwingkreis (1304) eine Umrichterausgangsspannung bereitzustellen und die Umrichtersteuereinrichtung (1308) dazu ausgestaltet ist, einen Umrichterphasenwinkel zwischen der Umrichterausgangsspannung und einem Umrichterausgangsstrom auf einem festen Wert zu halten.

9. Leistungsumwandlungssystem (1300) nach Anspruch 8, wobei die Umrichtersteuereinrichtung (1308) dazu ausgestaltet ist, den Umrichterphasenwinkel auf ungefähr 15 Grad zu steuern.

10. Leistungsumwandlungssystem (1300) nach Anspruch 6, wobei der Resonanzschwingkreis (1304) ein Reihenschwingkreis ist.

11. Leistungsumwandlungssystem nach Anspruch 1, wobei das System ein Stromquellenumrichtersystem ist, der Gleichstromzwischenkreis (602) eine Gleichstromzwischenkreisdrossel umfasst, die an den Ausgang des aktiven Gleichrichters (601) gekoppelt ist, und der Resonanzschwingkreis (604) ein Parallelschwingkreis ist.

12. Leistungsumwandlungssystem nach Anspruch 1, wobei das System ein Spannungsquellenumrichtersystem ist, der Gleichstromzwischenkreis (602) einen Gleichstromzwischenkreiskondensator umfasst, der an den Ausgang des aktiven Gleichrichters (601) gekoppelt ist und der Resonanzschwingkreis (604) ein Reihenschwingkreis ist.

13. Leistungsumwandlungssystem nach Anspruch 1, wobei die Umrichtersteuereinrichtung (1308) dazu ausgestaltet ist, die Umrichtertransistoren zu steuern, um dem Resonanzschwingkreis (1304) eine Umrichterausgangsspannung mit einer Umrichterausgangsfrequenz bereitzustellen, die höher als eine Resonanzfrequenz des Resonanzschwingkreises (1304) ist.

14. Leistungsumwandlungssystem nach Anspruch 1, wobei die Umrichtersteuereinrichtung (1308) dazu ausgestaltet ist, die Umrichtertransistoren zu steuern, um dem Resonanzschwingkreis (1304) eine Umrichterausgangsspannung bereitzustellen und die Umrichtersteuereinrichtung (1308) dazu ausgestaltet ist, einen Umrichterphasenwinkel zwischen der Umrichterausgangsspannung und einem Umrichterausgangsstrom auf einem festen Wert zu halten.

15. Leistungsumwandlungssystem nach Anspruch 14, wobei die Umrichtersteuereinrichtung (1308) dazu ausgestaltet ist, den Umrichterphasenwinkel auf ungefähr 15 Grad zu steuern.


**Revendications**

1. Système de conversion de puissance (600; 1300), comprenant :

   un redresseur actif (601; 1301) présentant des transistors de redresseur;
   un circuit de liaison CC (602; 1302) couplé à une sortie du redresseur actif (601; 1301);
   un onduleur (603; 1303) présentant des transistors d'onduleur et une entrée couplée au circuit de liaison CC (602; 1302);
   un dispositif de commande de redresseur (606; 1306) configuré pour commander les transistors de redresseur à l'aide d'une modulation de largeur d'impulsions sinusoïdale (SPWM) avec une commande d'indice de modulation (MI);
   un dispositif de commande d'onduleur (608; 1308); et
   un filtre d'entrée (610; 1310) couplé à une entrée du redresseur actif (601; 1301); **caractérisé en ce que**
   un circuit résonnant bouchon (604; 1304) est couplé à une sortie de l'onduleur (603; 1303), le circuit résonnant bouchon (604; 1304) présentant une bobine de chauffage par induction, et le dispositif de commande de redresseur (606; 1306) est configuré pour commander les transistors de redresseur selon un angle constant ($\alpha$) entre l'amorçage des transistors de redresseur par rapport à une tension de phase d'entrée CA afin de commander une puissance de sortie de système.

2. Système de conversion de puissance (600) selon la revendication 1, dans lequel le circuit de liaison CC (602) présente un réacteur de liaison CC couplé à la sortie du redresseur actif (601).

3. Système de conversion de puissance (600) selon la revendication 2, dans lequel le dispositif de commande d'onduleur (608) est configuré pour commander les transistors d'onduleur afin de fournir une tension de sortie d'onduleur au circuit résonnant bouchon (604) à une fréquence de sortie d'onduleur supérieure à une fréquence résonnante du circuit résonnant bouchon (604).

4. Système de conversion de puissance (600) selon la revendication 2, dans lequel le dispositif de commande de d'onduleur (608) est configuré pour commander les transistors d'onduleur afin de fournir une tension de sortie d'onduleur au circuit résonnant bouchon (604) et le dispositif de commande d'onduleur (608) est configuré pour conserver un angle de phase d'onduleur entre la tension de sortie d'onduleur et un courant de sortie d'onduleur à une valeur fixe.

5. Système de conversion de puissance (600) selon la revendication 2, dans lequel le circuit résonnant bouchon (604) est un circuit résonnant parallèle.

6. Système de conversion de puissance (1300) selon la revendication 1, dans lequel le circuit de liaison CC (1302) présente un condensateur CC couplé à la sortie du redresseur actif (1301).

7. Système de conversion de puissance (1300) selon la revendication 6, dans lequel le dispositif de commande d'onduleur (1308) est configuré pour commander les transistors d'onduleur afin de fournir une tension de sortie d'onduleur au circuit résonnant bouchon (1304) à une fréquence de sortie d'onduleur supérieure à une fréquence résonnante du circuit résonnant bouchon (1304).

8. Système de conversion de puissance (1300) selon la revendication 6, dans lequel le dispositif de commande d'onduleur (1308) est configuré pour commander les transistors d'onduleur afin de fournir une tension de sortie d'onduleur au circuit résonnant bouchon (1304) et le dispositif de commande d'onduleur (1308) est configuré pour conserver un angle de phase d'onduleur entre la tension de sortie d'onduleur et un courant de sortie d'onduleur à une valeur fixe.

9. Système de conversion de puissance (1300) selon la revendication 8, dans lequel le dispositif de commande d'onduleur (1308) est configuré pour commander l'angle de phase d'onduleur à 15 degrés approximativement.

10. Système de conversion de puissance (1300) selon la revendication 6, dans lequel le circuit résonnant bouchon (1304) est un circuit résonnant série.

11. Système de conversion de puissance selon la revendication 1, dans lequel le système est un système d'onduleur de source de courant, le circuit de liaison CC (602) inclut un réacteur de liaison CC couplé à la sortie du redresseur actif (601), et le circuit résonnant bouchon (604) est un circuit résonnant parallèle.

12. Système de conversion de puissance selon la revendication 1, dans lequel le système est un système d'onduleur de source de tension, le circuit de liaison CC (602) inclut un condensateur de liaison CC couplé à la sortie du redresseur actif (601), et le circuit résonnant bouchon (604) est un circuit résonnant série.

13. Système de conversion de puissance selon la revendication 1, dans lequel le dispositif de commande d'onduleur (1308) est configuré pour commander les transistors d'onduleur afin de fournir une tension de sortie d'onduleur au circuit résonnant bouchon (1304) à une fréquence de sortie d'onduleur supérieure à une fréquence résonnante du circuit résonnant bouchon (1304).

14. Système de conversion de puissance selon la revendication 1, dans lequel le dispositif de commande d'onduleur (1308) est configuré pour commander les transistors d'onduleur afin de fournir une tension de sortie d'onduleur au circuit résonnant bouchon (1304) et le dispositif de commande d'onduleur (1308) est configuré pour conserver un angle de phase d'onduleur entre la tension de sortie d'onduleur et un courant de sortie d'onduleur à une valeur fixe.

15. Système de conversion de puissance selon la revendication 14, dans lequel le dispositif de commande d'onduleur (1308) est configuré pour commander l'angle de phase d'onduleur à 15 degrés approximativement.

FIG. 1

FIG. 2

FIG. 3

EP 4 066 596 B1

FIG. 4

FIG. 5

EP 4 066 596 B1

FIG. 6

FIG. 7

FIG. 8

FIG. 9

EP 4 066 596 B1

FIG. 10

EP 4 066 596 B1

FIG. 11

EP 4 066 596 B1

FIG. 12

EP 4 066 596 B1

1300

1303

1304

1302

1301

1310

INVERTER CONTROL

1308

RECTIFIER CONTROL

1306

FIG. 13

**EP 4 066 596 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6366483 B1
- CN 201238406 Y